# EUROPEAN PATENT APPLICATION

(11) **EP 4 800 060 A1**
(43) Date of publication of application: **02.09.2026**
(21) Application number: 24882474.0
(22) Date of filing: 25.10.2024
(51) Int. Cl.: C08L 23/08, B60R 21/215, C08K 5/523, C08L 23/14, C08L 23/16

(54) **THERMOPLASTIC ELASTOMER COMPOSITION, MOLDED BODY, AND AUTOMOTIVE COMPONENT**

(30) Priority: 26.10.2023 JP 2023184208
(71) Applicant: Mitsui Chemicals, Inc., Tokyo 104-0028 (JP)
(72) Inventor: ISHIKAWA Ryo, Sodegaura-shi, Chiba 299-0265 (JP)
(74) Representative: Hoffmann Eitle
(86) International application number: PCT/JP2024/038035
(87) International publication number: WO 2025/089365

(57) **Abstract**

A thermoplastic elastomer composition, in which a content of a propylene-based block copolymer (A) is 30 to 70% by mass, a content of an ethylenic copolymer rubber (B) is 30 to 70% by mass, a content of an at least partially crosslinked ethylenic copolymer rubber (C) is 0 to 15% by mass (provided that a total amount of the propylene-based block copolymer (A), the ethylenic copolymer rubber (B), and the ethylenic copolymer rubber (C) is 100% by mass), and a mass ratio of the propylene-based block copolymer (A) to a crystal nucleating agent (D), which is a salt of a phosphate ester, (W_{A}/W_{D}) is 300 to 1100, a thermoplastic elastomer molded body, and an automotive component.

## Description

### Technical Field

The present invention relates to a thermoplastic elastomer composition, a molded body, and an automotive component.

### Background Art

Olefinic thermoplastic elastomers are made of raw materials such as an ethylenic copolymer and a crystalline olefinic polymer such as polypropylene, which are therefore more lightweight and easier to be recycled, compared to other thermoplastic elastomers. Moreover, since they do not generate toxic gases when burned, from the viewpoints of energy conservation and resource-saving and, more recently, of global environmental protection, they are widely used, particularly as substitutes for vulcanized rubber, in automotive components, industrial machinery parts, electrical and electronic components, building materials, and the like,

In particular, when compounded with a β-crystal nucleating agent, a propylene-based polymer is known to improve impact resistance and rigidity. For example, Patent Literature 1 discloses that a crystalline olefinic polymer with specific physical properties, an ethylenic copolymer rubber, and a β-crystal nucleating agent are compounded in a specific ratio to obtain a composition having a favorable balance between low-temperature impact resistance, tensile properties, and gloss. An example of the automotive component described above includes an airbag cover for an automotive airbag system.

### Citation List

### Patent Literature

[Patent Literature 1] JP2019-147944A

### Summary of Invention

### Technical Problem

Resin compositions used in an automotive component, such as airbag covers for automotive airbag systems, are required to have improved impact strength at lower temperatures so that they can withstand more severe usage environments, requiring that an airbag is less likely to be shattered when expanded and usable in a wide range of temperature environments from low temperature to high temperature. Moreover, when a molded body is removed upon injection molding, it may deform by an ejector, thereby requiring a resin composition to be less likely to deform even when used in injection molding.

The problem to be solved by one embodiment of the present invention is to provide a thermoplastic elastomer composition that can yield a molded body having a high elastic modulus and excellent both in mold releasability and low-temperature impact resistance. Moreover, the problem to be solved by one embodiment of the present invention is to provide a molded body and an automotive component having a high elastic modulus and excellent both in mold releasability and low-temperature impact resistance.

### Solution to Problem

Means to solve the above-described problems include the following aspects:
<1> A thermoplastic elastomer composition, wherein a content of a propylene-based block copolymer (A) is 30 to 70% by mass,
   a content of an ethylenic copolymer rubber (B) is 30 to 70% by mass,
   a content of an at least partially crosslinkedethylenic copolymer rubber (C) is 0 to 15% by mass (provided that a total amount of the propylene-based block copolymer (A), the ethylenic copolymer rubber (B), and the ethylenic copolymer rubber (C) is 100% by mass), and
   a mass ratio of the propylene-based block copolymer (A) to a crystal nucleating agent (D), which is a sodium salt of a phosphate ester, (W_{A}/W_{D}) is 300 to 1100.
<2> The thermoplastic elastomer composition according to <1>, wherein the content of the ethylenic copolymer rubber (C) is 1 to 15% by mass (provided that a total amount of the propylene-based block copolymer (A), the ethylenic copolymer rubber (B), and the ethylenic copolymer rubber (C) is 100% by mass).
<3> The thermoplastic elastomer composition according to <1> or <2>, wherein the ethylenic copolymer rubber (C) is ethylene/propylene/non-conjugated polyene copolymer rubber.
<4> The thermoplastic elastomer composition according to any one of <1> to <3>, wherein the propylene-based block copolymer (A) has a melt flow rate (MFR) of 20 to 200 g/10 minutes and a melting point (Tm) of 145 to 170°C, as measured in accordance with ASTM D1238 under conditions of 230°C and a load of 2.16 kg.
<5> The thermoplastic elastomer composition according to any one of <1> to <4>, wherein the ethylenic copolymer rubber (B) comprises at least one of an ethylene/1-butene copolymer and an ethylene/1-octene copolymer.
<6> A thermoplastic elastomer molded body which is a molded body of the thermoplastic elastomer composition according to any one of <1> to <5>.
<7> An automotive component comprising the thermoplastic elastomer molded body according to <6>.
<8> The automotive component according to <7>, which is an airbag cover.

### Advantageous Effects of Invention

According to one embodiment of the present invention, a thermoplastic elastomer composition that yields a molded body having a high elastic modulus and excellent both in mold releasability and low-temperature impact resistance, is provided. According to one embodiment of the present invention, a molded body and an automotive component having a high elastic modulus and excellent both in mold releasability and low-temperature impact resistance, are provided.

### Description of Embodiments

The present invention will be described in detail below. The description of constituent elements as described below may be made based on representative embodiments of the present invention, but the present invention is not limited to such embodiments.

In the present description, the numerical range that is represented with "to" means a range that includes the numerical values described before and after "to" as a lower limit value and an upper limit value.

In the present description, when referring to the amount of each component in a composition, which has a plurality of substances corresponding to each component in the composition, the amount of each component means the total amount of those substances present in the composition, unless otherwise specified.

In the present description, a unit that is described before or after "to" denoting a numerical range means to denote the same unit, unless otherwise specified.

In the present description, a combination of two or more preferred aspects is a more preferred aspect.

Moreover, in the present description, each component in a composition or each constituent unit in a polymer may be contained alone, or used in combination of two or more thereof, unless otherwise specified.

The present invention will be described in detail below.

### <Thermoplastic elastomer composition>

In the thermoplastic elastomer composition according to the present invention, a content of a propylene-based block copolymer (A) is 30 to 70% by mass,
a content of an ethylenic copolymer rubber (B) is 30 to 70% by mass,
a content of an at least partially crosslinkedethylenic copolymer rubber (C) is 0 to 15% by mass (provided that the total amount of the propylene-based block copolymer (A), the ethylenic copolymer rubber (B), and the ethylenic copolymer rubber (C) is 100% by mass), and
a mass ratio of the propylene-based block copolymer (A) to a crystal nucleating agent (D) (W_{A}/W_{D}) is 300 to 1100.

The thermoplastic elastomer composition according to the present invention, having a configuration described above can yield a molded body having a high elastic modulus and excellent both in mold releasability and low-temperature impact resistance. The reason therefor is not clear, but the following mechanism is presumed.

The thermoplastic elastomer composition according to the present invention contains the crystal nucleating agent (D) in a specific ratio thereof to the copolymer (A), so that the crystal nucleating agent (D) promotes crystallization of the copolymer (A), improving mold releasability and facilitating providing a high elastic modulus. It is conjectured that the crystallized copolymer (A) is uniformly dispersed in the composition, so that a molded body to be obtained from the composition causes stress dispersion upon impact, resulting in having improved impact resistance.

It is to be note that when the initial flexural elastic modulus of 400 MPa or higher, as determined by the method described in Examples as described below, the elastic modulus is high, allowing a molded body obtained from the thermoplastic elastomer composition according to the present invention to be less likely to deform, which is preferred.

Each component of the thermoplastic elastomer composition will be described in detail below.

### <<Propylene-based block copolymer (A)>>

As long as the propylene-based block copolymer (A) is a block copolymer mainly containing propylene, the type of monomer copolymerized with propylene is not particularly limited. From the viewpoint that the resulting molded body is excellent in low-temperature impact resistance, the propylene-based block copolymer (A) is preferably a copolymer of propylene and an α-olefin other than propylene.

Herein, the propylene-based block copolymer (A) is a copolymer that mainly contain a constituent unit derived from propylene, and the content of a constituent unit derived from propylene is preferably 50% by mass or more, more preferably 80% by mass or more, still more preferably 90% by mass or more, based on the total mass of the copolymer (A).

It is to be noted that the content of a constituent unit derived from propylene, as well as the content of a constituent unit derived from ethylene, the content of a constituent unit derived from an α-olefin, and the content of a constituent unit derived from a non-conjugated polyene, as described below, can be determined by calculation based on the results of ¹³C-NMR measurements.

The α-olefin other than propylene is not particularly limited, and examples thereof include α-olefins having 2 to 20 carbon atoms (provided that an α-olefin having 3 carbon atoms is excluded).

Examples of the α-olefin include ethylene, 1-butene, 1-pentene, 1-hexene, 4-methyl-1-pentene, 1-octene, 1-decene, 1-dodecene, 1-tetradodecene, 1-hexadodecene, 1-octadodecene, 1-eicosene, 4-methyl-1-pentene, 2-methyl-1-butene, 3-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, ethyl-1-octene, and methyl-1-nonene.

Among these, the α-olefin other than propylene is preferably ethylene and an α-olefin having 4 to 8 carbon atoms and more preferably ethylene, 1-hexene, and 1-octene. These α-olefins may be used alone, or used in combination of two or more thereof.

Specific examples of the suitable propylene-based block copolymer (A) include a propylene/ethylene block copolymer, a propylene/1-butene block copolymer, a propylene/1-pentene block copolymer, a propylene/1-hexene block copolymer, a propylene/1-octene block copolymer, and a propylene/ethylene/1-butene block copolymer.

Among them, the propylene-based block copolymer (A) is preferably a propylene/ethylene block copolymer.

The content of a propylene-based block copolymer (A) is 30 to 70% by mass, preferably 35 to 65% by mass, more preferably 40 to 60% by mass, and still more preferably 45 to 55% by mass (provided that the total amount of the propylene-based block copolymer (A), the ethylenic copolymer rubber (B), and the ethylenic copolymer rubber (C) is 100% by mass).

When the content of a propylene-based block copolymer (A) is within the above range, the resulting molded body is likely to have a high elastic modulus and is excellent both in mold releasability and low-temperature impact resistance.

The propylene-based block copolymer (A) may be used alone, or used in combination of two or more thereof.

The content of a constituent unit derived from an α-olefin in the propylene-based block copolymer (A) is preferably 1% by mass or more and less than 50% by mass, more preferably 10 to 40% by mass, and still more preferably 20 to 45% by mass, based on the total mass of the copolymer (A).

From the viewpoints of excellent flowing performance and excellent moldability of the resulting automotive interior and automotive exterior materials, the propylene-based block copolymer (A) preferably has a melt flow rate (MFR) measured in accordance with ASTM D1238 at 230°C under a load of 2.16 kg of 20 to 200 g/10 minutes, 55 to 180 g/10 minutes, or 75 to 175 g/10 minutes, more preferably 80 to 150 g/10 minutes, and still more preferably 85 to 130 g/10 minutes.

The melting point (Tm) of the propylene-based block copolymer (A) is preferably 145 to 170°C and more preferably 155 to 165°C. There are possibilities that the melting point (Tm) of the propylene-based block copolymer (A) being lower than 145°C, improves impact resistance at low temperatures, but decreases rigidity, and Tm exceeding 170°C increases rigidity, but deteriorates impact resistance at low temperatures.

The melting point (Tm) of the propylene-based block copolymer (A) can be determined by a measurement method as described in Examples below.

From the viewpoint of excellent mechanical strength of the propylene-based block copolymer (A), it has a density of preferably 0.85 to 0.95 g/cm³, more preferably 0.88 to 0.94 g/cm³, and still more preferably 0.90 to 0.93 g/cm³.

From the viewpoint of excellent mechanical strength of the propylene-based block copolymer (A), it has an intrinsic viscosity [η] measured in decalin (decahydronaphthalene) at 135°C of preferably 2.0 to 7.0 dl/g, more preferably 3.0 to 7.0 dl/g, and still more preferably 3.3 to 7.0 dl/g.

The propylene-based block copolymer (A) may consist of a fossil fuel-derived monomer alone, or may consist of a biomass-derived monomer alone, or may be used in combination of a fossil fuel-derived monomer and biomass-derived monomer.

The fossil fuel includes petroleum, coal, a natural gas, a shale gas, or a combination thereof. The biomass refers to any renewable natural raw material, including fungi, yeast, algae, and bacteria, derived from plants or animals, and the residues of the renewable natural raw materials.

### <<Ethylenic copolymer rubber (B)>>

The ethylenic copolymer rubber (B) is not particularly limited in terms of the type of monomer copolymerized with ethylene, as long as it is copolymer rubber mainly containing ethylene, however, it is preferably copolymer rubber of ethylene and an α-olefin having 3 to 20 carbon atoms.

The ethylenic copolymer rubber (B) and the at least partially crosslinked ethylenic copolymer rubber (C) as described below are preferably copolymers having a crystallinity of less than 10% as determined by differential scanning calorimetry (DSC).

The content of a constituent unit derived from ethylene in the ethylenic copolymer rubber (B) is preferably 50% by mass or more, more preferably 50 to 95% by mass, still more preferably 50 to 90% by mass, and even still more preferably 55 to 85% by mass, based on the total mass of the copolymer rubber (B).

Examples of the α-olefins having 3 to 20 carbon atoms include propylene, 1-butene, 1-pentene, 1-hexene, 4-methyl-1-pentene, 1-octene, 1-decene, 1-dodecene, 1-tetradodecene, 1-hexadodecene, 1-octadodecene, 1-eicosene, 4-methyl-1-pentene, 2-methyl-1-butene, 3-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, ethyl-1-octene, and methyl-1-nonene.

Among these, the α-olefin is preferably an α-olefin having 3 to 8 carbon atoms, more preferably propylene, 1-butene, and 1-octene, still more preferably 1-butene and 1-octene, and particularly preferably 1-butene.

The α-olefin of 1-butene can provide a thermoplastic elastomer composition with superior low-temperature impact properties.

The above-described α-olefins may be used alone, or contained in combination of two or more thereof.

The copolymer rubber of ethylene and an α-olefin having 3 to 20 carbon atoms may contain monomers other than ethylene and an α-olefin having 3 to 20 carbon atoms (other monomers), but is preferably free of the other monomer.

The other monomer is not particularly limited, and an example thereof includes a non-conjugated polyene as described below.

The ethylenic copolymer rubber (B) preferably differs in its composition from the ethylenic copolymer rubber (C) before crosslinking as described below, and more preferably contains at least one of an ethylene/1-butene copolymer (EBR) and an ethylene/1-octene copolymer, and it is still more preferably an ethylene/1-butene copolymer (EBR) and an ethylene/1-octene copolymer.

The ethylenic copolymer rubber (B) has a melting point (Tm) of 30 to 120°C or no melting point observed, as measured by differential scanning calorimetry (DSC), and preferably has a melting point of 30 to 100°C or no melting point observed, more preferably has a melting point of 30 to 80°C or no melting point observed, and still more preferably has no melting point observed.

The melting point (Tm) is determined by a measurement method as described in Examples below.

From the viewpoint of excellent low-temperature impact resistance , the ethylenic copolymer rubber (B) preferably has a melt flow rate (MFR) of 0.01 to 10 g/10 minutes, more preferably 0.1 to 5 g/10 minutes, and still more preferably 0.1 to 3 g/10 minutes, as measured at 230°C under a load of 2.16 kg in accordance with ASTM D1238.

The content of an ethylenic copolymer rubber (B) (the total content when two or more of the ethylenic copolymer rubber (B) are contained) is 30 to 70% by mass, preferably 35 to 65% by mass, more preferably 40 to 60% by mass, and still more preferably 45 to 55% by mass (provided that the total amount of the propylene-based block copolymer (A), the ethylenic copolymer rubber (B), and the ethylenic copolymer rubber (C) is 100% by mass).

When the content of an ethylenic copolymer rubber (B) is within the above range, the resulting molded body has a high elastic modulus and is excellent both in mold releasability and low-temperature impact resistance.

The ethylenic copolymer rubber (B) may be contained alone, or contained in combination of two or more thereof.

The ethylenic copolymer rubber (B) may consist of a fossil fuel-derived monomer alone, or may consist of a biomass-derived monomer alone or may be used in combination of a fossil fuel-derived monomer and a biomass-derived monomer.

A method for producing the ethylenic copolymer rubber (B) is not particularly limited, and known production methods can be used.

### <<Ethylenic copolymer rubber (C)>>

The at least partially crosslinked ethylenic copolymer rubber (C) (hereinafter may be simply referred to as "ethylenic copolymer rubber (C)") is preferably a copolymer of ethylene and an α-olefin having 3 to 20 carbon atoms. The α-olefin having 3 to 20 carbon atoms is not particularly limited, and examples thereof include an α-olefin having 3 to 20 carbon atoms for the aforementioned ethylene-based copolymer rubber (B).

From the viewpoints of the resulting molded body having a high elastic modulus and excellent both in both mold releasability and low-temperature impact resistance, an α-olefin having 3 to 8 carbon atoms is preferable among the α-olefins having 3 to 20 carbon atoms, with propylene and 1-butene being more preferred, and propylene being still more preferred.

The content of a constituent unit derived from ethylene in the ethylenic copolymer rubber (C) is preferably 50% by mass or more, more preferably 50 to 95% by mass, still more preferably 50 to 90% by mass, and particularly preferably 55 to 85% by mass, based on the total mass of the copolymer rubber (C).

The ethylenic copolymer rubber (C) may be copolymer rubber of ethylene, an α-olefin having 3 to 20 carbon atoms, and a non-conjugated polyene.

The non-conjugated polyene is not particularly limited, and examples thereof include chain non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene, and 4-ethylidene-1,7-undecadiene; cyclic non-conjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, cyclopentadiene, and norbornadiene; and trienes such as 2,3-diisopropylidene-5-norbornene, 2-ethylidene-3-isopropylidene-5-norbornene, 2-propenyl-2,2-norbornadiene, and 4-ethylidene-8-methyl-1,7-nonadiene.

Among these, the non-conjugated polyene is preferably 5-ethylidene-2-norbornene, 5-vinyl-2-norbornene, cyclopentadiene, and 4-ethylidene-8-methyl-1,7-nonadiene, with 5-ethylidene-2-norbornene being more preferred.

From the viewpoint of balance between flowing performance and physical properties, the ethylenic copolymer rubber (C) is preferably ethylene/propylene/non-conjugated polyene copolymer rubber and ethylene/1-butene/non-conjugated polyene copolymer rubber, more preferably ethylene/propylene/non-conjugated polyene copolymer rubber, and still more preferably ethylene/propylene/5-ethylidene-2-norbornene copolymer rubber.

From the viewpoint of balance between flowing performance and physical properties that are produced by the ethylenic copolymer rubber (C), the ethylenic copolymer rubber (C) preferably has a different composition from the aforementioned ethylenic copolymer rubber (B).

When the ethylenic copolymer rubber (C) is the ethylene/α-olefin/non-conjugated polyene copolymer rubber, it has an iodine value of preferably 1 to 30 g/100 g and more preferably 3 to 25 g/100 g. Also, a Mooney viscosity (ML₍₁₊₄₎100°C) is preferably 10 to 250.

The ethylenic copolymer rubber (C) may consist of a fossil fuel-derived monomer alone or may consist of a biomass-derived monomer alone, or may be used in combination of a fossil fuel-derived monomer and a biomass-derived monomer.

From the viewpoint of excellent mechanical strength and oil resistance of the ethylenic copolymer rubber (C) before crosslinking, it preferably has an intrinsic viscosity [η] measured in decalin (decahydronaphthalene) at 135°C of 2.0 to 7.0 dl/g, more preferably 3.0 to 7.0 dl/g, and still more preferably 3.3 to 7.0 dl/g.

It is to be noted that in a case in which the ethylenic copolymer rubber (C) is oil-extended ethylene copolymer rubber that has been oil-extended with a softener (E) as described below, the intrinsic viscosity [η] of the ethylenic copolymer rubber (C) refers to a value measured on the single ethylenic copolymer rubber (C) that has been degreased before measurement of the intrinsic viscosity [η].

### -Softener (E)-

The ethylenic copolymer rubber (C) may be a so-called oil-extended rubber, which has been compounded with the softener (E), preferably a mineral oil-based softener upon its production. The softener (E) (preferably a mineral oil-based softener) is not particularly limited, and a known softener can be used, such as paraffin-based process oil.

The ethylenic copolymer rubber (C) may be at least partially crosslinked, or may be completely crosslinked. Preferably, the ethylenic copolymer rubber (C) is at least partially crosslinked by dynamic crosslinking of the ethylenic copolymer rubber (C).

The term "dynamic crosslinking" refers to processing such that a mixture containing the ethylenic copolymer rubber (C), a necessary component, and the like are melt kneaded with shear force applied thereto to obtain the ethylenic copolymer rubber (C) such that a crosslinked structure has been at least partially formed.

A timing of crosslinking the ethylenic copolymer rubber (C) before crosslinking is not particularly limited. For example, before mixed with the propylene-based block copolymer (A), the ethylenic copolymer rubber (C) may be at least partially (dynamically) crosslinked, or after or while mixed with the propylene-based block copolymer (A), the ethylenic copolymer rubber (C) may be at least partially (dynamically) crosslinked. The ethylenic copolymer rubber (C) having a high degree of crosslinking, allows a molded body to be obtained from the thermoplastic elastomer composition to have favorable oil resistance and rubber elasticity, even though the thermoplastic elastomer composition has low hardness.

### Method for producing ethylenic copolymer rubber (C)

An example of a method for producing the ethylenic copolymer rubber (C) includes a method for mixing the propylene-based block copolymer (A), the ethylenic copolymer rubber (C), a crosslinking agent as described below, and other additives, if necessary, to dynamically crosslink the mixture.

An apparatus to be used for the melt kneading is not particularly limited, and examples thereof include conventionally known mixing and kneading apparatus such as a Banbury mixer, a mixing roll, a Henschel mixer, a kneader, and a single- or twin-screw extruder.

The order to add the components upon mixing and kneading is not particularly limited, but when two or more crosslinking agents are used, these crosslinking agents are preferably added simultaneously.

Dynamic crosslinking is preferably carried out in a closed-type apparatus and preferably under an inert gas atmosphere such as nitrogen or carbon dioxide.

A heating temperature for dynamic crosslinking is typically 125 to 280°C, preferably 145 to 240°C, and the mixing and kneading time is typically 1 to 30 minutes, preferably 3 to 20 minutes.

Also, the shear force applied upon the mixing and kneading may be shear force such that the maximum shear rate is, for example, 10 to 100,000 sec⁻¹, preferably 100 to 50,000 sec⁻¹, more preferably 1,000 to 10,000 sec⁻¹, and still more preferably 2,000 to 7,000 sec⁻¹.

Examples of the crosslinking agent include known crosslinking agents to be used for dynamic crosslinking, such as an organic peroxide, a phenolic resin, sulfur, a hydrosilicone-based compound, an amino resin, quinone or its derivative, an amine-based compound, an azo-based compound, an epoxy-based compound, an isocyanate, and a thermosetting elastomer. Among these, from the viewpoint of balance between flowing performance and physical properties, the crosslinking agent is preferably an organic peroxide.

Specific examples of the organic peroxide include peroxy ketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, and n-butyl-4,4-bis(t-butylperoxy) valerate; dialkyl peroxides such as di-t-butyl peroxide, dicumyl peroxide, t-butylcumyl peroxide, α, α'-bis(t-butylperoxy-m-isopropyl)benzene, α, α'-bis(t-butylperoxy)diisopropylbenzene, 2,5-dimethyl-2,5-bis(t-butylperoxy) hexane, and 2,5-dimethyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, and m-trioyl peroxide; peroxy esters such as t-butyl peroxyacetate, t-butyl peroxyisobutyrate, t-butylperoxy-2-ethylhexanoate, t-butyl peroxylaurate, t-butyl peroxybenzoate, di-t-butylperoxyisophthalate, 2,5-dimethyl-2,5-di(benzoylperoxy)hexane, t-butylperoxymaleic acid, t-butylperoxyisopropyl carbonate, and cumylperoxyoctate; and hydroperoxides such as t-butyl hydroperoxide, cumene hydroperoxide, diisopropylbenzene hydroperoxide, 2,5-dimethylhexane-2,5-dihydroperoxide, and 1,1,3,3-tetramethylbutyl peroxide.

From the viewpoints of thermal decomposition temperature and crosslinkability among the compounds described above, 1,1-bis(t-butylperoxy)-3,3,5-trimethylcyclohexane, di-t-butyl peroxide, dicumyl peroxide, 2,5-dimethyl-2,5-bis(t-butylperoxy) hexane, and 2,5-dimethyl-2,5-bis(t-butylperoxy)hexyne-3 are preferred, with 2,5-dimethyl-2,5-bis(t-butylperoxy)hexane being more preferred. From the viewpoint of flowing performance upon molding, the organic peroxide is preferably used in an amount of 1 to 20 parts by mass, more preferably 5 to 15 parts by mass, based on 100 parts by mass of the ethylenic copolymer rubber (C).

From the viewpoint of a crosslinking reaction being rendered uniform, a crosslinking aid may be combined for use in a dynamic crosslinking reaction.

The crosslinking aid is not particularly limited, and examples thereof include a divinyl compound such as divinylbenzene; oxime compounds such as p-quinone dioxime and p,p'-dibenzoylquinone dioxime; nitroso compounds such as N-methyl-N-4-dinitrosoaniline and nitrosobenzene; a maleimide compound such as trimethylolpropane-N,N'-m-phenylenedimaleimide; other sulfur compounds, diphenyl guanidine, and triallyl cyanurate. In addition thereto, examples of the crosslinking aid include polyfunctional methacrylate monomers such as ethylene glycol dimethacrylate, diethylene glycol dimethacrylate, polyethylene glycol dimethacrylate, trimethylolpropane trimethacrylate, and allyl methacrylate; and polyfunctional vinyl monomers such as vinyl butyrate and vinyl stearate.

The amount of crosslinking aid added can be appropriately determined depending on the desired purpose. For example, the amount of crosslinking aid is preferably 0.5 to 5 parts by mass and more preferably 0.5 to 3 parts by mass based on 100 parts by mass of the ethylenic copolymer rubber (C).

In dynamic crosslinking, an additive other than the crosslinking agent and crosslinking aid (hereinafter simply referred to as an "additive") may be added as long as the object of the present invention is not impaired. Examples of the additive include plasticizers such as polyethylene glycol and a phthalate ester such as dioctyl phthalate (DOP); heat stabilizers such as 2,6-di-t-butyl-4-methylphenol and n-octadecyl-3-(3,5'-di-t-butyl-4-hydroxyphenyl)propionate; and antioxidants such as trisnonylphenyl phosphite and distearyl pentaerythritol diphosphite.

The amount of the above-described additive added can be appropriately adjusted as long as the object of the present invention is not impaired.

The content of the ethylenic copolymer rubber (C) is 0 to 15% by mass, preferably 0 to 10% by mass, and more preferably 0 to 8% by mass (provided that the total amount of the propylene-based block copolymer (A), the ethylenic copolymer rubber (B), and the ethylenic copolymer rubber (C) is 100% by mass). Also, the content of the ethylenic copolymer rubber (C) is preferably 1 to 15% by mass, more preferably 1 to 10% by mass, and still more preferably 1 to 7% by mass (provided that the total amount of the propylene-based block copolymer (A), the ethylenic copolymer rubber (B), and the ethylenic copolymer rubber (C) is 100% by mass).

The content of the ethylenic copolymer rubber (C) being within the above range provides excellent low-temperature impact resistance.

The ethylenic copolymer rubber (C) may be contained alone, or contained in combination of two or more thereof.

### <<Crystal nucleating agent (D)>>

The thermoplastic elastomer composition contains a crystal nucleating agent (D), which is a salt of a phosphate ester. From the view point of further improving low-temperature impact resistance, the crystal nucleating agent (D) is preferably a metal salt of an organic phosphate ester and more preferably a sodium salt of a phosphate ester.

The salt of a phosphate ester is not particularly limited, and examples thereof include a sodium salt of 2-hydroxy-2-oxo-4,6,10,12-tetra-tert-butyl-1,3,2-dibenzo [d,g] perhydrodioxaphosphocin and a 2,2'-methylenebis(4,6-di-tert-butylphenyl)phosphate aluminum salt-based compound.

Also, the crystal nucleating agent (D) is preferably a metal salt of a cyclic phosphate ester.

The crystal nucleating agent (D) may be a synthetic product or a commercially available product. Examples of a commercially available product of the metal salt of an organic phosphate ester include products under the trade names: ADK STAB NA-11 (a sodium salt of 2-hydroxy-2-oxo-4,6,10,12-tetra-tert-butyl-1,3,2-dibenzo [d,g] perhydrodioxaphosphocin), ADK STAB NA-18, ADK STAB NA-27, ADK STAB NA-21, and ADK STAB NA-71 (all manufactured by ADEKA

### CORPORATION) .

The content of a crystal nucleating agent (D) is preferably 0.01 to 1.5 parts by mass, more preferably 0.05 to 1.0 part by mass, and still more preferably 0.05 to 0.5 parts by mass, based on 100 parts by mass of the total amount of the propylene-based block copolymer (A), ethylenic copolymer rubber (B), and ethylenic copolymer rubber (C). When the content of a nucleating agent (D) is within the above range, the resulting molded product is excellent in improving impact resistance at low temperatures.

The nucleating agent (D) may be contained alone, or contained in combination of two or more thereof.

The mass ratio of the propylene-based block copolymer (A) to the nucleating agent (D) (W_{A}/W_{D}) is 300 to 1,100, preferably 400 to 1,100, and more preferably 500 to 1,100. When W_{A}/W_{D} is within the above range, the resulting molded body has a high elastic modulus and is excellent both in mold releasability and low-temperature impact resistance.

### [Other components]

The thermoplastic elastomer composition may contain a component (hereinafter also referred to as an "additive") other than the propylene-based block copolymer (A), ethylenic copolymer rubber (B), ethylenic copolymer rubber (C), crystal nucleating agent (D), and softener (E) as long as the effects of the present invention are not impaired.

The additive is not particularly limited, but examples thereof include known additives that have been used in the polyolefin field, such as resins other than the propylene-based block copolymer (A), ethylenic copolymer rubber (B), and ethylenic copolymer rubber (C); an acid scavenger and an ultraviolet-ray absorber; an antioxidant; a heat stabilizer; an agent for aging prevention; a light stabilizer, and a weather stabilizer; an antistatic agent; metal soap; an aliphatic amide; and a lubricant such as wax.

The other additive content is not particularly limited, as long as it does not impair the object of the present invention.

The amount of additive compounded is not particularly limited as long as the present invention produces an effect, however, the total amount of the other additive is typically 5 parts by mass or less, preferably 0.5 to 3.0 parts by mass, based on 100 parts by mass of the total amount of the propylene-based block copolymer (A), ethylenic copolymer rubber (B), and ethylenic copolymer rubber (C).

### [Method for producing thermoplastic elastomer composition]

The thermoplastic elastomer composition can be produced by a method for mixing the propylene-based block copolymer (A), the ethylenic copolymer rubber (B), the ethylenic copolymer rubber (C), and the crystal nucleating agent (D), as well as the softener (E) and other additives, if necessary, using a known method, such as a Henschel mixer, a V-blender, a ribbon blender, or a tumbler blender, or by a method for further melt kneading the components after mixing thereof, using a single-screw extruder, a multi-screw extruder, a kneader, or a Banbury mixer, followed by granulation or pulverization of the melt kneaded mixture. After mixing of each component, it may be further melt-kneaded using a single-screw extruder, a multi-screw extruder, a kneader, a Banbury mixer, or the like, followed by granulation or pulverization of the melt-kneaded mixture.

### <Thermoplastic elastomer molded body>

The thermoplastic elastomer molded body according to the present invention (hereinafter may be simply referred to as a "molded body") is a molded body of the above-described thermoplastic elastomer composition. The molded body can be molded into various molded bodies by known molding methods such as injection molding, extrusion molding, inflation molding, blow molding, extrusion blow molding, injection blow molding, press molding, vacuum molding, calendar molding, and foam molding.

Among the molding methods described above, injection molding is particularly preferred, and in this case, from the viewpoints of flowing performance, mold transferability, and oxidative degradation of the resin component, the molding temperature is preferably 170 to 260°C and more preferably 180 to 250°C.

From the view point of the molded body according to the present invention, which is excellent in impact resistance at low temperatures, the molded body is particularly suitable for use as automotive components such as an automotive skin material and an automotive airbag cover.

### Examples

The present invention will be described in more detail below based on Examples, but the present invention is not limited to these Examples.

### [Melt flow rate (MFR)]

The melt flow rate was measured in accordance with ASTM D1238 at 190°C and a load of 2.16 kg.

### [Intrinsic viscosity]

The intrinsic viscosity [η] (dl/g) was measured using a fully automatic intrinsic viscometer manufactured by Rigo Co., Ltd. at 135°C in decalin as a solvent for measurement.

### [Melting point]

The melting point of the ethylenic copolymer rubber (B) as would be described below was measured using a differential scanning calorimeter (DSC) in accordance with JIS K 7121. Specifically, a pellet of the ethylenic copolymer rubber (B) was heated to 230°C for 10 minutes, then cooled to 30°C at a rate of 10°C/min, held there for 1 minute, and then heated again at a rate of 10°C/min. In this case, the temperature at which the maximum endothermic heat was observed on a DSC curve, was determined to be a melting point.

### [Density]

The density of the propylene-based block copolymer (A) as would be described below was measured in accordance with ASTM D1505.

The thermoplastic elastomer compositions in the following Examples and Comparative Examples were prepared using the following raw materials.

### <<Propylene-based block copolymer (A)>>

· PP-1: This product is commercially available block polypropylene having a melt flow rate (MFR) (ASTM D1238, 230°C, 2.16 kg load) of 27 g/10 minutes, a density (ASTM D1505) of 0.91 g/cm³, and an initial flexural elastic modulus (ASTM D790) of 1,250 MPa.

It is to be noted that the intrinsic viscosity [η] measured by the above-described method was 3.5 (dl/g).
· PP-2: This product is commercially available block polypropylene having a melt flow rate (MFR) (ASTM D1238, 230°C, 2.16 kg load) of 55 g/10 minutes, a density (ASTM D1505) of 0.91 g/cm³, and an initial flexural elastic modulus (ASTM D790) of 1,200 MPa.

It is to be noted that the intrinsic viscosity [η] measured by the above-described method was 6.0 (dl/g).

### <<Ethylenic copolymer rubber (B)>>

### · EBR-1: Ethylene/1-butene copolymer

This product is a commercially available copolymer, which includes ethylene and 1-butene, having an ethylene content of 69% by mass and a melt flow rate (MFR) (ASTM D1238, 190°C, 2.16 kg load) of 0.5 g/10 minutes, and has substantially no melting peak observed on DSC.

### · EOR-1: Ethylene/1-octene copolymer

This product is a commercially available copolymer, which includes ethylene and 1-octene, with an ethylene content of 55% by mass and a melt flow rate (MFR) (ASTM D1238, 190°C, 2.16 kg load) of 0.5 g/10 minutes, and a melting point of 55°C on DSC.

### · EOR-2: ethylene/1-octene copolymer

This product is a commercially available copolymer, which includes ethylene and 1-octene with an ethylene content of 80% by mass, a melt flow rate (MFR) (ASTM D1238, 190°C, 2.16 kg load) of 1.0 g/10 minutes, and a melting point of 38°C on DSC.

### <<Ethylenic copolymer rubber (C)>>

### · TPV-1

50 parts by mass of the following oil-extended ethylene/propylene/5-ethylidene-2-norbornene copolymer rubber (E), 50 parts by mass of the block polypropylene (PP-2) described above, 0.3 parts by mass of an organic peroxide (2,5-dimethyl-2,5-bis(t-butylperoxy)hexane) (trade name "PERHEXA 25B" manufactured by NOF CORPORATION) as a crosslinking agent, 0.3 parts by mass of divinylbenzene as a crosslinking aid, and 0.1 parts by mass of a phenolic antioxidant (trade name "Irganox 1010" manufactured by BASF SE) as an antioxidant were thoroughly mixed with a Henschel mixer and extrusion-kneaded under the following conditions to carry out dynamic crosslinking.

### [Dynamic crosslinking conditions]

· Extruder: Model No. KTX-46, manufactured by Kobe Steel, Ltd.
· Cylinder temperature: C1 - C2 120°C, C3 - C4 140°C, and C5 - C14 200°C
· Die temperature: 200°C
· Screw rotation speed: 400 rpm
· Extrusion rate: 80 kg/h
· Oil-extended ethylene/propylene/5-ethylidene-2-norbornene copolymer rubber (E)

This product is a commercially available product with a content of a constituent unit derived from ethylene of 78% by mass, an iodine value of 13 g/100 g, and an intrinsic viscosity [η] of 3.4 dl/g measured in decalin at 135°C, and is oil-extended rubber compounded with 40 parts by mass of a softener (Diana Process Oil PW-380, manufactured by Idemitsu Kosan Co., Ltd.) based on 100 parts by mass of the ethylene/propylene/5-ethylidene-2-norbornene copolymer rubber.

### <<Crystal nucleating agent (D)>>

· NA-11: A crystal nucleating agent as a salt of a phosphate ester, manufactured by ADEKA CORPORATION
· GEL ALL D: 1,3:2,4-Bis-O-benzylidene-D-glucitol (dibenzylidene sorbitol), manufactured by New Japan Chemical Co., Ltd.
· RIKACLEAR PC1: Tris(methylcyclohexyl)propanetricarboxamide, manufactured by New Japan Chemical Co., Ltd.
· NU-100: N,N'-Dicyclohexyl-2,6-naphthalenedicarboxamide (product name: NU-100, manufactured by New Japan Chemical Co., Ltd.)

### (Example 1 and Comparative Examples 1 to 4 and 6)

Each material was weighed in the amount shown in Table 1, and 0.1 parts by mass of a phenolic antioxidant (product name: Irganox 1010, manufactured by BASF SE) as a heat stabilizer and 0.1 part by mass of a diazo-based weather stabilizer (product name: Tinuvin 326, manufactured by BASF SE) as a weather stabilizer were thoroughly mixed with a Henschel mixer based on 100 parts by mass of the mixture of each component, and the mixture was extrusion-kneaded under the following conditions to obtain pellets of a thermoplastic elastomer composition.

### (Kneading conditions)

· Extruder: Model No. KTX-46, manufactured by Kobe Steel, Ltd.
· Cylinder temperature: C1 - C2 120°C, C3 - C4 140°C, and C5 - C14 200°C
· Die temperature: 200°C
· Screw rotation speed: 400 rpm
· Extrusion rate: 80 kg/h

### (Examples 2 and 3 as well as Comparative Example 5)

Each material was weighed in the amount shown in Table 1, and 0.1 parts by mass of a phenolic antioxidant (product name: Irganox 1010, manufactured by BASF SE) as a heat stabilizer and 0.1 parts by mass of a diazo-based weather stabilizer (product name: Tinuvin 326, manufactured by BASF SE) as a weather stabilizer were thoroughly mixed in a Henschel mixer based on 100 parts by mass of the mixture of each component, which was then extrusion-kneaded under the following conditions to obtain pellets of a thermoplastic elastomer composition.

### (Kneading conditions)

· Extruder: Model No. KTX-46, manufactured by Kobe Steel, Ltd.
· Cylinder temperature: C1 - C2 120°C, C3 - C4 140°C, and C5 - C14 200°C
· Die temperature: 200°C
· Screw rotation speed: 400 rpm
· Extrusion rate: 80 kg/h

The pellets fabricated above were used to fabricate specimens for each evaluation as in the manner described below. The obtained specimens were used to perform the following evaluations.

### <Injection molding machine>

· Model No: NEX140 (manufactured by NISSEI PLASTIC INDUSTRIAL CO., LTD.)
· Cylinder temperature (injection molding temperature): 220°C
· Mold temperature: 40°C

### [Mold releasability]

Mold release pressure was measured using a pressure sensor on a mold ejector pin upon ejecting a boxy molded product of 140 × 140 × 2 (mm) (thickness). The values are shown in Table 2. The lower the mold release pressure, the more excellent the mold releasability is.

### [Initial flexural elastic modulus]

The initial flexural elastic modulus was measured in accordance with ASTM D790. The thermoplastic elastomer composition was injection molded under the above-described conditions to fabricate a specimen with a thickness of 3.2 mm for initial flexural elastic modulus measurement, and the initial flexural elastic modulus was measured in an atmosphere at a temperature of 23°C. The results are shown in Table 2.

The value obtained by having measured the initial flexural elastic modulus, which was 400 MPa or more, can be said to indicate that the test specimen has a high elastic modulus and is less likely to deform.

### [Low-temperature impact resistance]

An Izod impact test was performed in accordance with ASTM D256.

The thermoplastic elastomer composition was injection molded under the above-described conditions to fabricate a specimen with a thickness of 3.2 mm for Izod impact strength measurement, and the test was performed at -40°C. With the observation of the broken state of the specimen after the test, low-temperature impact resistance was evaluated based on the following criteria. The evaluation result of PB indicates favorable results, with the specimen being less likely to be shattered.

### -Evaluation criteria-

PB: The specimen was only partially broken, and maintained its shape.

B: The specimen was broken and did not maintain its shape.

**[Table 1]**

| | Compound type (parts by mass) | Example | | | Comparative Example | | | | | |
|---|---|---|---|---|---|---|---|---|---|---|
| | | 1 | 2 | 3 | 1 | 2 | 3 | 4 | 5 | 6 |
| Propylene-based block copolymer (A) | PP-1 | 48 | - | - | 48 | 48 | 48 | 48 | - | 48 |
| | PP-2 | - | 51 | 51 | - | - | - | - | 51 | - |
| Ethylenic copolymer rubber (B) | EBR-1 | - | 20 | 20 | - | - | - | - | 20 | - |
| | EOR-1 | - | 24 | 24 | - | - | - | - | 24 | - |
| | EOR-2 | 52 | - | - | 52 | 52 | 52 | 52 | - | 52 |
| Ethylenic copolymer rubber (C) | TPV-1 | - | 5 | 5 | - | - | - | - | 5 | - |
| | NA-11 | 0.05 | 0.05 | 0.1 | - | 0.4 | - | - | - | - |
| | GEL ALL D | - | - | - | - | - | 0.05 | - | - | - |
| | RIKACLEAR PC1 | - | - | - | - | - | | 0.05 | - | - |
| | NU-100 | - | - | - | - | - | | - | - | 0.05 |
| Mass ratio of copolymer (A) to crystal nucleating agent (D) (W_{A}/W_{D}) | | 960 | 1020 | 510 | - | 120 | 960 | 960 | - | 960 |

**[Table 2]**

| | | | Example | | | Comparative Example | | | | | |
|---|---|---|---|---|---|---|---|---|---|---|---|
| | | | 1 | 2 | 3 | 1 | 2 | 3 | 4 | 5 | 6 |
| MFR | | g/10 minutes | 12 | 8 | 8 | 12 | 12 | 13 | 13 | 8 | 13 |
| Initial flexural elastic modulus | | MPa | 400 | 440 | 460 | 370 | 420 | 340 | 350 | 390 | 380 |
| Low-temperature impact resistance | -40°C | | PB | PB | PB | PB | PB | PB | PB | PB | PB |
| | | J/m | 1080 | 1030 | 1040 | 1070 | 1000 | 1070 | 1060 | 1020 | 1040 |
| | -45°C | | PB | PB | PB | B | B | B | B | B | B |
| | | J/m | 800 | 910 | 880 | 190 | 180 | 180 | 170 | 150 | 170 |
| Mold release pressure | | Mpa | 0.2 | 11.4 | 11.5 | 0.3 | 0.2 | 0.5 | 0.2 | 11.6 | 0.5 |

The molded body obtained from the thermoplastic elastomer composition of Example 1 is found to have the same or more resistance to deformation compared to the molded bodies obtained from the thermoplastic elastomer compositions of Comparative Examples 1 to 4 and 6, and is excellent both in mold releasability and low-temperature impact resistance. Also, the molded bodies obtained from the thermoplastic elastomer compositions of Examples 2 and 3 are found to have a higher elastic modulus and are excellent both in mold releasability and low-temperature impact resistance, compared to the molded body obtained from the thermoplastic elastomer composition of Comparative Example 5.

## Claims

1. A thermoplastic elastomer composition, wherein a content of a propylene-based block copolymer (A) is 30 to 70% by mass,
a content of an ethylenic copolymer rubber (B) is 30 to 70% by mass,
a content of an at least partially crosslinked ethylenic copolymer rubber (C) is 0 to 15% by mass (provided that a total amount of the propylene-based block copolymer (A), the ethylenic copolymer rubber (B), and the ethylenic copolymer rubber (C) is 100% by mass), and
a mass ratio of the propylene-based block copolymer (A) to a crystal nucleating agent (D), which is a sodium salt of a phosphate ester, (W_{A}/W_{D}) is 300 to 1100.

2. The thermoplastic elastomer composition according to claim **1,** wherein the content of the ethylenic copolymer rubber (C) is 1 to 15% by mass (provided that a total amount of the propylene-based block copolymer (A), the ethylenic copolymer rubber (B), and the ethylenic copolymer rubber (C) is 100% by mass).

3. The thermoplastic elastomer composition according to claim 1, wherein the ethylenic copolymer rubber (C) is ethylene/propylene/non-conjugated polyene copolymer rubber.

4. The thermoplastic elastomer composition according to claim 1, wherein the propylene-based block copolymer (A) has a melt flow rate (MFR) of 20 to 200 g/10 minutes and a melting point (Tm) of 145 to 170°C, as measured in accordance with ASTM D1238 under conditions of 230°C and a load of 2.16 kg.

5. The thermoplastic elastomer composition according to claim 1, wherein the ethylenic copolymer rubber (B) comprises at least one of an ethylene/1-butene copolymer and an ethylene/1-octene copolymer.

6. A thermoplastic elastomer molded body which is a molded body of the thermoplastic elastomer composition according to any one of claims 1 to 5.

7. An automotive component comprising the thermoplastic elastomer molded body according to claim 6.

8. The automotive component according to claim 7, which is an airbag cover.
